# EUROPEAN PATENT APPLICATION

(11) **EP 2 354 199 A1**
(43) Date of publication of application: **10.08.2011**
(21) Application number: 11152374.2
(22) Date of filing: 27.01.2011
(51) Int. Cl.: C09D 11/10

(54) **Cationic polymerization ink**

(30) Priority: 03.02.2010 JP 2010021799
(71) Applicant: Brother Kogyo Kabushiki Kaisha, Nagoya-shi, Aichi 467-8561 (JP)
(72) Inventor: Noguchi, Akiko, Nagoya-shi Aichi 467-8562 (JP); Miura, Yuki, Nagoya-shi Aichi 467-8562 (JP); Naruse, Atsushi, Nagoya-shi Aichi 467-8562 (JP)
(74) Representative: Prüfer & Partner GbR European Patent Attorneys

(57) **Abstract**

A cationic polymerization ink that can be hardened by cationic polymerization upon irradiation with active energy rays includes monomers. The monomers include an epoxy monomer and an oxetane monomer, and also include a monofunctional monomer and a polyfunctional monomer. A total functional group equivalent weight, which is a total of a functional group equivalent weight of the monofunctional monomer and a functional group equivalent weight of the polyfunctional monomer, is not less than 130 and not greater than 144. A ratio of the functional group equivalent weight of the polyfunctional monomer to the total functional group equivalent weight is not less than 23 percent and not greater than 38 percent. The cationic polymerization ink can be hardened sufficiently even in a case where a light source is that emits a small amount of light is used.

## Description

### BACKGROUND

The present invention relates to a cationic polymerization ink for inkjet use.

Inks that can be hardened by a cross-linking reaction that is caused by active energy rays such as ultraviolet rays or the like are known to be used in Inkjet devices and the like. The molecular structures of these sorts of inks are generally categorized into two types, that is, a radical polymerization type and a cationic polymerization type. Of these, the cationic polymerization type inks (cationic polymerization inks) have advantages of resistance to oxygen inhibition, low cure shrinkage, and good adhesion to an adherend. Active development has therefore been pursued with a focus on cationic polymerization inks (for example, refer to Japanese Laid-Open Patent Publication No. 2005-179506).

### SUMMARY

However, the above-described known cationic polymerization inks exhibit a slower rate of the cross-linking polymerization reaction than the radical polymerization type inks. Therefore, in a case where the amount of light that is emitted from a light source for the active energy rays (for example, a case where an LED is used as the light source), the cumulative amount of light in the active energy rays with which the ink is irradiated may be low, such that the ink cannot be sufficiently hardened.

It is an object of the present invention to provide a cationic polymerization ink that hardens sufficiently even in a case where the cumulative amount of light is low.

A cationic polymerization ink of the present invention is an ink that can be hardened by cationic polymerization and that includes monomers. The monomers include an epoxy monomer that is a monomer having an epoxy group as a functional group and an oxetane monomer that is a monomer having an oxetane group as the functional group. The monomers include a monofunctional monomer having one functional group and a polyfunctional monomer having at least two functional groups. A total functional group equivalent weight, which is a total of a functional group equivalent weight of the monofunctional monomer and a functional group equivalent weight of the polyfunctional monomer, is not less than 130 and not greater than 144. A ratio of the functional group equivalent weight of the polyfunctional monomer to the total functional group equivalent weight is not less than 23 percent and not greater than 38 percent.

In the cationic polymerization ink, a ratio of a weight of the epoxy monomer to a total weight of the epoxy monomer and the oxetane monomer may be not less than 40 percent and not greater than 90 percent.

The cationic polymerization ink may further include a polymerization initiator that initiates polymerization of the monomers.

The cationic polymerization ink may have a pencil hardness not less than HB in a case where the cationic polymerization ink is hardened by irradiation with ultraviolet light under a condition that a cumulative amount of light is 500 mJ/cm².

The cationic polymerization ink according to the present invention can harden sufficiently even in a case where a cumulative amount of light is small. Therefore, the cationic polymerization ink can be hardened in a short time. It is therefore possible to maintain good abrasion resistance in the cationic polymerization ink that is formed on a recording medium. Furthermore, a light source (an LED or the like) that emits a small amount of light can be used as a light source for hardening the cationic polymerization ink.

### BRIEF DESCRIPTION OF THE DRAWINGS

Exemplary embodiments will be described below in detail with reference to the accompanying drawings in which:
FIG. 1 is a table that shows monomers that are used for making test materials for working examples and comparison examples;
FIG. 2 is a table that shows mixture ratios of monomers, polymerization initiators, and sensitizers that are used for making the test materials for working examples 1 to 12;
FIG. 3 is a table that shows mixture ratios of monomers, polymerization initiators, and sensitizers that are used for making the test materials for comparison examples 1 to 26;
FIG. 4 is a table that shows results of pencil hardness tests of the test materials for the working examples 1 to 12; and
FIG. 5 is a table that shows results of pencil hardness tests of the test materials for the comparison examples 1 to 26.

### DETAILED DESCRIPTION OF PREFERRED EMBODIMENT

A cationic polymerization ink (hereinafter sometimes simply called an ink) according to an embodiment includes monomers, which include at least a monomer that has an epoxy group as a functional group (hereinafter called an epoxy monomer) and a monomer that has an oxetane group as the functional group (hereinafter called an oxetane monomer). The cationic polymerization ink can be used as an ink for an inkjet printer, for example. After printing, the cationic polymerization ink is irradiated with light. The irradiation with light causes a cross-linking reaction to occur in the functional group portion of the ink. Due to the reaction, the monomer is polymerized and the cationic polymerization ink is hardened. This makes it possible to fix the printed image to a recording medium.

### (1) Monomers

Among the epoxy monomers, phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and the like, for example, can be used as monomers that have one functional group (hereinafter called monofunctional monomers).

Among the epoxy monomers, aromatic epoxides, cycloaliphatic epoxides, aliphatic epoxides, and the like can be used as monomers that have at least two functional groups (hereinafter called polyfunctional monomers).

Preferable aromatic epoxides include polyhydric phenols that have at least one aromatic nucleus, as well as di- and polyglycidyl ethers that are manufactured by a reaction between epichlorohydrin and the alkylene oxide adducts of multivalent phenols. Representative examples include bisphenol A, di- and polyglycidyl ethers of alkylene oxide adducts of bisphenol A, hydrogenated bisphenol A, di- and polyglycidyl ethers of alkylene oxide adducts of hydrogenated bisphenol A, novolac-type epoxy resin, and the like. The alkylene oxides may be ethylene oxide, propylene oxide, or the like.

Preferable cycloaliphatic epoxides include compounds that contain one of cyclohexene oxide and cyclopentene oxide. The compounds that contain one of cyclohexene oxide and cyclopentene oxide can be produced by epoxidizing compounds that have at least one cycloalkane ring, such as a cyclohexene ring, a cyclopentene ring, or the like with an appropriate oxidizing agent, such as hydrogen peroxide, peroxide, or the like.

Preferable aliphatic epoxides include aliphatic polyhydric alcohols, as well as di- and polyglycidyl ethers of the alkylene oxide adducts of aliphatic polyhydric alcohols. Representative examples include diglycidyl ethers of alkylene glycols, such as diglycidyl ether of ethylene glycol, diglycidyl ether of propylene glycol, diglycidyl ether of 1,6-hexanediol, and the like, polyglycidyl ethers of polyhydric alcohols, such as glycerin, di- and triglycidyl ethers of alkylene oxide adducts of glycerin, and the like, as well as diglycidyl ethers of polyalkylene glycols, such as polyethylene glycol, diglycidyl ether of alkylene oxide adducts of polyethylene glycol, polypropylene glycol, diglycidyl ether of alkylene oxide adducts of polypropylene glycol, and the like. The alkylene oxides may be ethylene oxide, propylene oxide, or the like.

Among the oxetane monomers, known oxetane monomers such as those described in Japanese Laid-Open Patent Publication No. 2001-220526 and Japanese Laid-Open Patent Publication No. 2001-310937, for example, can be used.

It is preferable for both at an epoxy monomer and an oxetane monomer to be used together. It is desirable for a ratio of the epoxy monomer weight to the total weight of the epoxy monomer and the oxetane monomer to be not less than 40 percent and not greater than 90 percent, and it is even more desirable for the ratio to be not less than 80 percent and not greater than 90 percent. The initial rate of polymerization of an epoxy monomer when it is irradiated with light is fast, but the polymer ratio is not increased by the irradiation with light, so an epoxy monomer tends not to harden. With an oxetane monomer, by contrast, the polymer ratio increases in accordance with the irradiation with light, so high hardening is possible, but the initial rate of polymerization is slow. In the present embodiment, an epoxy monomer and an oxetane monomer are both used, and regulating their ratios makes it possible to increase the rate of polymerization while maintaining a high polymer ratio. This in turn makes it possible to use, as the light source for hardening the ink, a light source (an LED or the like) that, even though it emits only a small amount of light, consumes little electric power and can be made compact.

If the ratio of the epoxy monomer is less than 40 percent by weight, the rate of polymerization when the ink is irradiated with light may become slow. A light source that emits a large amount of light (a mercury lamp, a xenon lamp, a noble gas fluorescent lamp, or the like) therefore may become necessary in order to harden the ink sufficiently. Generally, a light source that emits a large amount of light also generates a large amount of heat, so it may be difficult to incorporate such a light source into a compact printer or the like. If the ratio of the epoxy monomer is greater than 90 percent by weight, the ink may not harden fully due to the insufficient polymerization, which may worsen the abrasion resistance of the ink that is formed on the recording medium.

It is preferable for the monomers that are described above to include at least a monofunctional monomer and a polyfunctional monomer. It is preferable for a ratio of the functional group equivalent weight of the polyfunctional monomer to the total of the functional group equivalent weight of the monofunctional monomer and the functional group equivalent weight of the polyfunctional monomer to be not less than 23 percent and not greater than 38 percent. Hereinafter, the functional group equivalent weight of the monofunctional monomer is called the monofunctional group equivalent weight. The functional group equivalent weight of the polyfunctional monomer is called the polyfunctional group equivalent weight. The total of the monofunctional group equivalent weight and the polyfunctional group equivalent weight is called the total functional group equivalent weight. The total functional group equivalent weight can be calculated by multiplying the functional group equivalent weight of each molecule by the weight percentage for each constituent substance, and adding up the results for all of the constituent substances. Maintaining the ratio of the polyfunctional group equivalent weight to the total functional group equivalent weight in the range of not less than 23 percent and not greater than 38 percent increases the rate of polymerization of the ink when it is irradiated with light, so the ink can be hardened in a short time. It is therefore possible to maintain good abrasion resistance in the ink that is formed on the recording medium. Furthermore, the ink can be hardened well even in a case where the cumulative amount of emitted light is low. Therefore, a light source (an LED or the like) that emits a small amount of light and can be made compact can be used as the light source for hardening the ink.

In a case where the ratio of the polyfunctional group equivalent weight is greater than 38 percent, the movement of the monomers tends to become restricted as the polymerization reaction develops. This may interfere with the development of the polymerization reaction of the unreacted functional groups and may slow the rate of polymerization, so it is not desirable. It is also undesirable because it makes it necessary to use a light source that emits a large amount of light in order to harden the ink sufficiently. In a case where the ratio of the polyfunctional group equivalent weight is less than 23 percent, the ratio of the monofunctional monomers to the polyfunctional monomers increases, making it difficult for side chains to form networks during polymerization. This is not desirable, because the ink may not harden sufficiently or strength of the hardened ink may be insufficient, even in a case where the cumulative amount of emitted light is large.

It is desirable for the total functional group equivalent weight to be not less than 130 and not greater than 144. Maintaining the total group equivalent weight in the range of not less than 130 and not greater than 144 increases the rate of polymerization of the ink when it is irradiated with light, so the ink can be hardened in a shorter time. It is therefore possible to maintain good abrasion resistance in the ink that is formed on the recording medium. Furthermore, the ink can be hardened well even in a case where the cumulative amount of emitted light is low, so an LED or the like can be used as the light source.

In a case where the total group equivalent weight is less than 130, it is assumed to mean either that the molecular mass of the monomers is low or that the number of the polyfunctional monomers is high. In a case where the molecular mass of the monomers is low, the number of monomer molecules that are present in a given amount of the ink is high. A high number of monomer molecules means that the movement of the monomers tends to become restricted as the polymerization reaction develops. This may interfere with the development of the polymerization reaction of the unreacted functional groups and may slow the rate of polymerization, so it is not desirable. It is also undesirable because it may make it necessary to use a light source that emits a large amount of light in order to harden the ink sufficiently. Similarly, in a case where the number of the polyfunctional monomers is high, the movement of the monomers tends to become restricted as the polymerization reaction develops, which may slow the rate of polymerization, so it is not desirable.

In a case where the total group equivalent weight is gretaer than 144, it is assumed to mean either that the molecular mass of the monomers is high or that the number of the polyfunctional monomers is low. In a case where the molecular mass of the monomers is high, the number of monomer molecules that are present in a given amount of the ink is low. A low number of monomer molecules means that an insufficient number of side chains will be formed during polymerization. This is not desirable, because the ink may not harden sufficiently or strength of the hardened ink may be insufficient, even in a case where the cumulative amount of emitted light is large. In a case where the number of the polyfunctional monomers is low, the ratio of the monofunctional monomers to the polyfunctional monomers increases, making it difficult for side chains to form networks during polymerization. This is not desirable, because the ink may not harden sufficiently or strength of the hardened ink may be insufficient, even in a case where the cumulative amount of emitted light is large.

Vinyl ether compounds can be used in combination as the monomers. Examples of vinyl ether compounds include divinyl ether compounds, trivinyl ether compounds, monovinyl ether compounds, and the like. Examples of divinyl ether compounds include ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, and the like. Examples of trivinyl ether compounds include trimethylolpropane trivinyl ether. Examples of monovinyl ether compounds include ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-O-propylene carbonate, dodecyl vinyl ether, and diethylene glycol monovinyl ether.

### (2) Pigments

Various types of known dyes and pigments may be contained in the monomers that are described above. From the standpoint of superior weather resistance, it is preferable to use a pigment.

In the present embodiment, both inorganic pigments and organic pigments can be used as the pigment. Examples of the inorganic pigments include carbon-based pigments, metal oxide pigments, sulfide pigments, pigments that are formed from metal salts, metal powders, and the like. Examples of the carbon-based pigments include carbon black, carbon refined, and carbon nanotubes. Examples of the metal oxide pigments include iron black, cobalt blue, zinc oxide, titanium oxide, chromium oxide, and iron oxide. An example of the sulfide pigments is zinc sulfide. Examples of the pigments that are formed from metal salts include sulfates, carbonates, silicates, and phosphates. Examples of the metal powders that can be used include aluminum powder, bronze powder, and zinc powder.

Examples of the organic pigments include nitro pigments, nitroso pigments, azo pigments (including azo lake pigments, insoluble azo pigments, condensed azo pigments, chelated azo pigments, and the like), lake pigments, phthalocyanine pigments, polycyclic pigments (perylene pigments, perynone pigments, anthraquinone pigments, quinacridone pigments, dioxane pigments, thioindigo pigments, isoindolinone pigments, quinofranone pigments, and the like), threne pigments, quinacridone pigments, quinacridine pigments, isoindolinone pigments, and the like. Examples of the nitroso pigments include aniline black and naphthol green B. Examples of the azo pigments include Bordeaux 10B, Lake Red 4R, and Cromophtal Red. Examples of the lake pigments include Peacock Blue Lake and Rhodamine Lake. An example of the phthalocyanine pigments is Phthalocyanine Blue. Examples of the threne pigments include Thioindigo Red and Indathrone Blue.

### (3) Polymerization initiators

A polymerization initiator may be added to the monomers that are described above. Various types of known polymerization initiators can be used as the polymerization initiator. For example, a photo acid generating agent can be used as the polymerization initiator. Specifically, a salt of an aromatic onium compound, such as diazonium, ammonium, iodonium, sulfonium, phosphonium, or the like, can be used, as can a sulfone compound that generates sulfonic acid, a halide that photogenerates a hydrogen halide, and an iron allene complex.

### (4) Sensitizers

A sensitizer may be added as necessary to the monomers that are described above. Various types of known sensitizers can be used as the sensitizer, but it is preferable to use a sensitizer that has an absorption spectrum that covers the wavelengths that are longer than 300 nanometers. Specifically, one of a polycyclic aromatic compound, a carbazole derivative, a thioxanthone derivative, and the like that has, as a substitute group, at least one of hydroxyl group, an aralkyloxy group and an alkoxy group that can be substituted can be used.

### (5) Light irradiation conditions

It is preferable for the light source that is used for irradiating the ink with light to have a wavelength that is not longer than 400 nanometers. For example, a mercury lamp, a xenon lamp, a noble gas fluorescent lamp, an LED, or the like can be used, but it is preferable to use an LED that generates less heat and can be made compact. The cumulative amount of light varies according to the film thickness of the ink, but in a case where the film thickness is 15 µm, it is desirable for the cumulative amount of light to be approximately 500 mJ/cm². Note that in a case where the film thickness is thinner, the ink will be sufficiently hardened by a smaller cumulative amount of light.

### (6) Characteristic: Pencil hardness

In the present embodiment, the pencil hardness of the cationic polymerization ink that is polymerized and hardened by irradiation with light is HB or harder. Making the pencil hardness at least HB makes it possible to maintain good abrasion resistance and to prevent damage that is due to abrasion from being inflicted on the ink that is formed on the recording medium.

As explained above, the cationic polymerization ink in the present embodiment hardens sufficiently even in a case where the cumulative amount of light is small, and it exhibits a pencil hardness of HB or harder. It is therefore possible to harden the cationic polymerization ink sufficiently in a short time. Furthermore, the ink that is formed on the recording medium can maintain good abrasion resistance that prevents damage from being inflicted on it due to abrasion.

Hereinafter, the present invention will be explained in concrete terms using working examples, but the present invention is not limited by the working examples. Hereinafter, (1) test specimen preparation, (2) an evaluation method, and (3) evaluation results will be explained in order.

### (1) Test specimen preparation

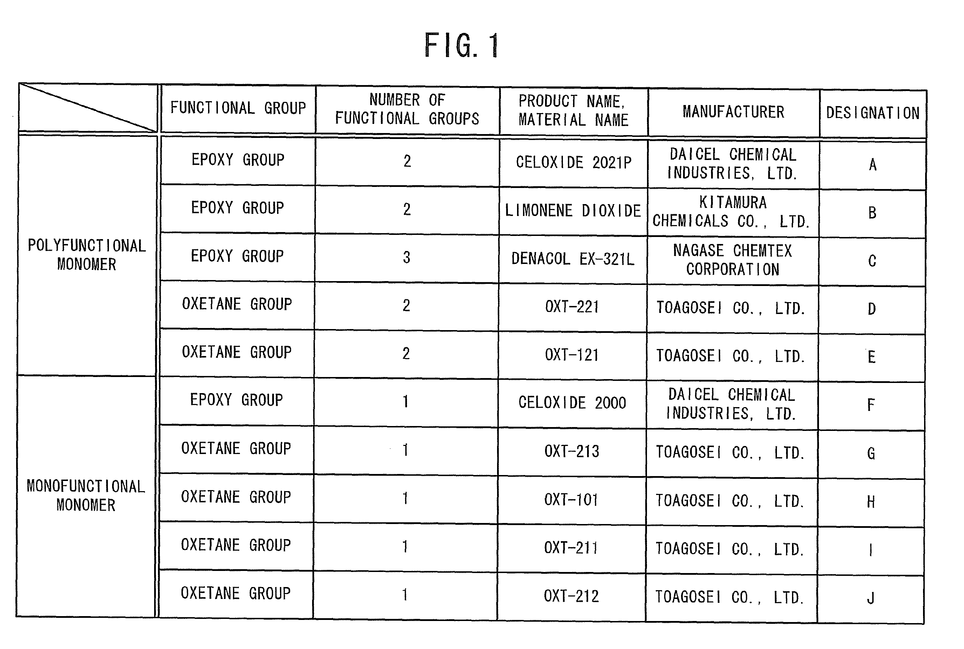

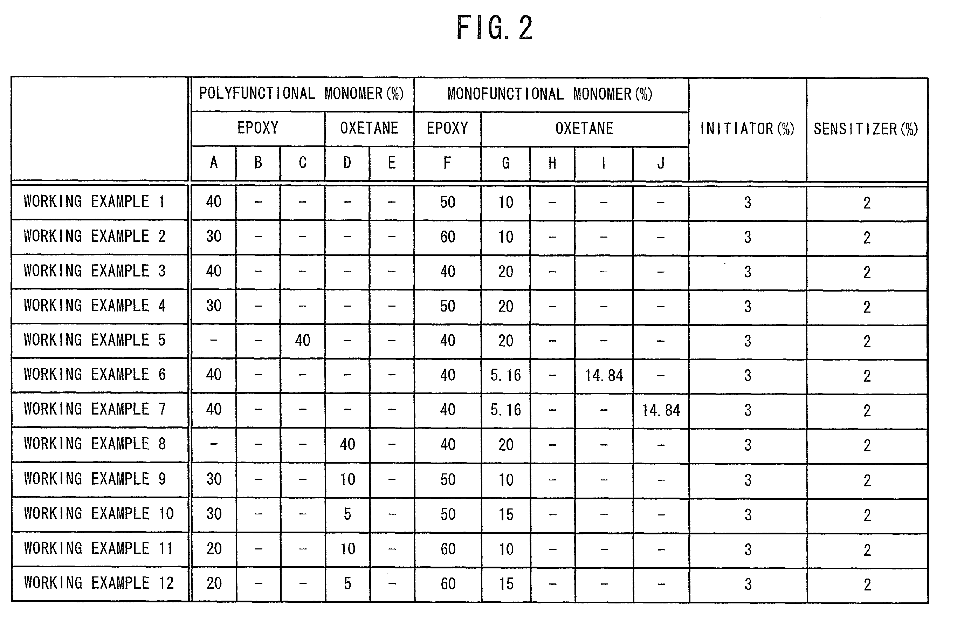

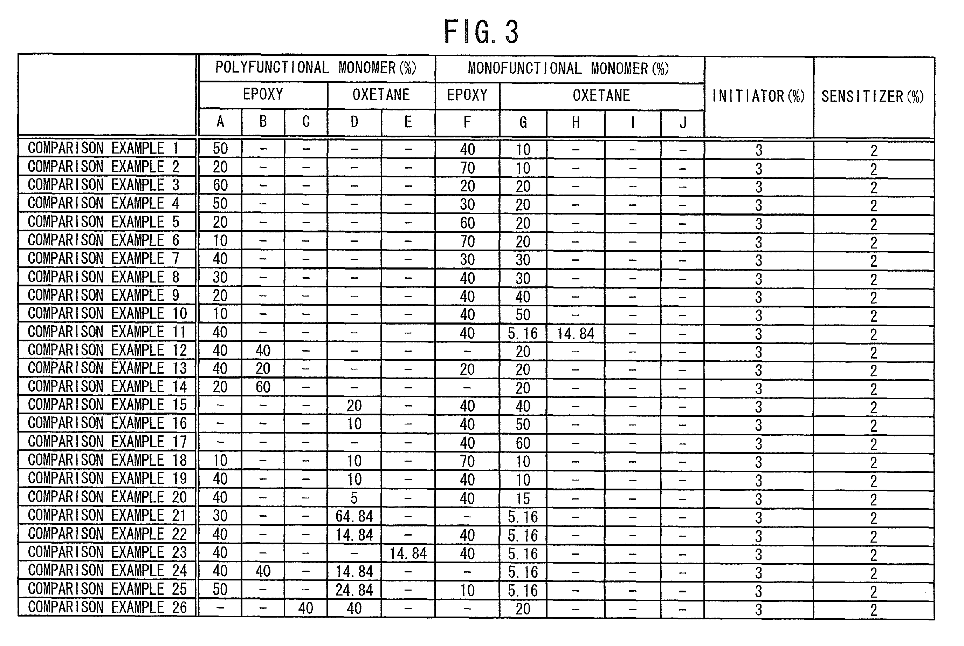

The various monomers that are shown in FIG 1 (polyfunctional monomers and monofunctional monomers A to J) were combined in the ratios that are shown in FIGS. 2 and 3. A photopolymerization initiator (CPI-210S (made by San-Apro, Ltd.)) and a sensitizer (Anthracure UVS-1101 (made by Kawasaki Kasei Chemicals, Ltd.)) were combined with the monomers in the ratios that are shown in FIGS. 2 and 3. Carbon black pigment was also combined with the monomers. The amount of the carbon black pigment that was combined was two percent by mass. Cationic polymerization inks were prepared by the process described above.

The bar-coating method was used to form films of the prepared inks on surfaces of a base material (Crisper K2323 (made by Toyobo Co., Ltd.)) that was 100 µm thick. The test specimens (working examples 1 to 12, comparison examples 1 to 26) that were formed from thin ink films with a thickness of approximately 15 *µ*m were produced by using a No. 9 bar.

The inks were hardened by irradiating each of the prepared test specimens with light. The light irradiation was performed using an Aicure UJ20 (made by Panasonic; Wavelength: 385 nm; WD: 25 cm) and a cylindrical lens (ANUJ6475s), such that the cumulative amount of light was 500 mJ/cm². After being irradiated with light, the test specimens were left at room temperature for 24 hours.

### (2) Evaluation method

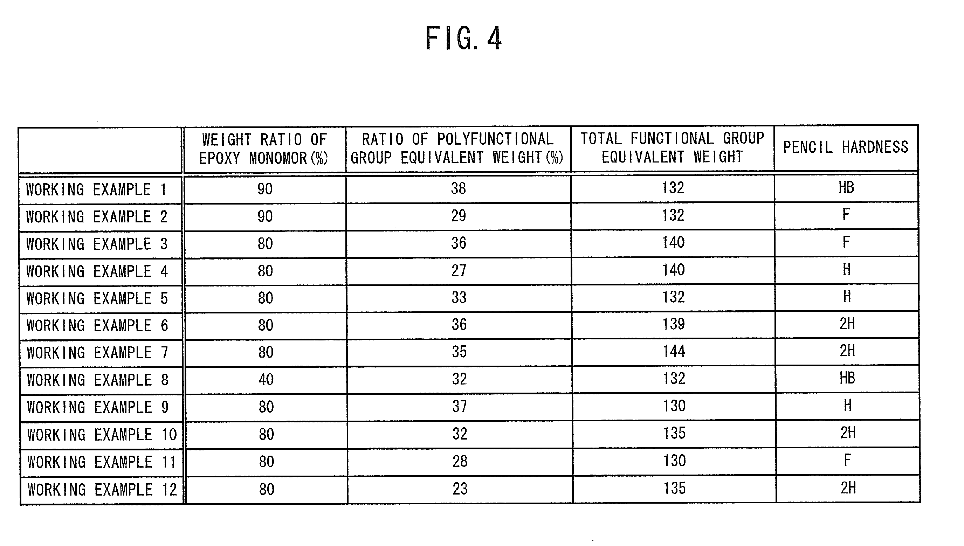

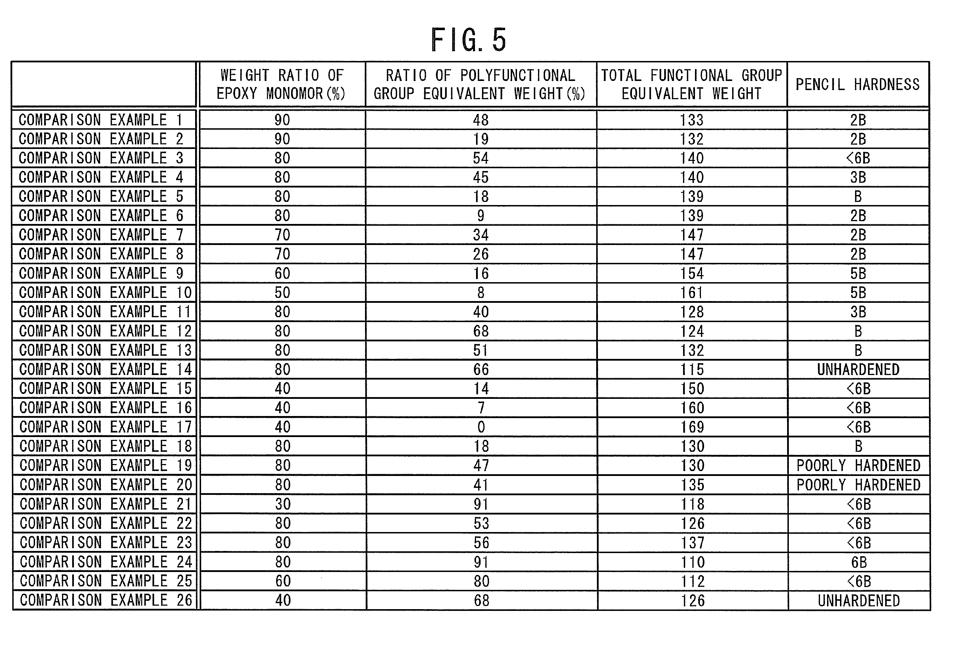

After the test specimens were irradiated with light, the pencil hardness of the hardened ink in each specimen was measured by performing a pencil hardness test. The testing was conducted based on JIS K5600-5-4. The test results are shown in FIGS. 4 and 5.

### (3) Evaluation results

As shown in FIG. 4, a pencil hardness of at least HB was reached in those cases (working examples 1 to 12) where the ratio of the polyfunctional group equivalent weight to the total functional group equivalent weight was not less than 23 percent and not greater than 38 percent and the total functional group equivalent weight was not less than 130 and not greater than 144. In contrast, as shown in FIG. 5, the pencil hardness was not greater than B in those cases where the ratio of the polyfunctional group equivalent weight was less than 23 percent (comparison examples 2, 5, 6, 9, 10, 15 to 18) and in those cases where the ratio of the polyfunctional group equivalent weight was greater than 38 percent (comparison examples 1, 3, 4, 11 to 14, 19 to 26). The pencil hardness was also not greater than B in those cases where the ratio of the total functional group equivalent weight was less than 130 (comparison examples 11, 12, 14, 21, 22, 24 to 26) and in those cases where the total group equivalent weight was greater than 144 (comparison examples 7 to 10, 15 to 17). These results indicate that a cationic polymerization ink that hardens well (pencil hardness: not less than HB) can be made by making the ratio of the polyfunctional group equivalent weight not less than 23 percent and not greater than 38 percent and making the total functional group equivalent weight not less than 130 and not greater than 144, even in a case where the cumulative amount of light is small (500 mJ/cm²).

As shown in FIG 4, the pencil hardness is at least HB in those cases where the weight ratio of the epoxy monomer to the total of the epoxy monomer and the oxetane monomer is not less than 40 percent and not greater than 90 percent (working examples 1 to 12). These results indicate that a cationic polymerization ink that hardens well can be made by making weight ratio of the epoxy monomer not less than 40 percent and not greater than 90 percent, even in a case where the cumulative amount of light is small.

## Claims

1. A cationic polymerization ink that can be hardened by cationic polymerization, comprising monomers, wherein:
the monomers include an epoxy monomer and an oxetane monomer, the epoxy monomer being a monomer having an epoxy group as a functional group, and the oxetane monomer being a monomer having an oxetane group as the functional group;
the monomers include a monofunctional monomer having one functional group and a polyfunctional monomer having at least two functional groups;
a total functional group equivalent weight is not less than 130 and not greater than 144, the total functional group equivalent weight being a total of a functional group equivalent weight of the monofunctional monomer and a functional group equivalent weight of the polyfunctional monomer; and
a ratio of the functional group equivalent weight of the polyfunctional monomer to the total functional group equivalent weight being not less than 23 percent and not greater than 38 percent.

2. The cationic polymerization ink according to claim 1, wherein
a ratio of a weight of the epoxy monomer to a total weight of the epoxy monomer and the oxetane monomer is not less than 40 percent and not greater than 90 percent.

3. The cationic polymerization ink according to either one of claims 1 and 2, further comprising a polymerization initiator that initiates polymerization of the monomers.

4. The cationic polymerization ink according to any one of claims 1 to 3, wherein
a pencil hardness of the cationic polymerization ink is not less than HB in a case where the cationic polymerization ink is hardened by irradiation with ultraviolet light under a condition that a cumulative amount of light is 500 mJ/cm².
